# EUROPÄISCHE PATENTSCHRIFT

(11) **EP 0 332 821 B1**
(45) Veröffentlichungstag und Bekanntmachung des Hinweises auf die Patenterteilung: **14.07.1993**
(21) Anmeldenummer: 89101456.5
(22) Anmeldetag: 27.01.1989
(51) Int. Cl.: H01B 7/28

(54) **Verfahren und Vorrichtung zum Längswasserabdichten vieladriger Kabelbündel**
Process and device for the manufacture of longitudinally waterproofed multifilament cable bundles
Procédé et dispositif d'étanchéification longitudinale d'un faisceau de câble à multifilament

(30) Priorität: 18.03.1988 DE 3809167
(43) Veröffentlichungstag der Anmeldung: 20.09.1989
(73) Patentinhaber: DSG Schrumpfschlauch GmbH, D-53340 Meckenheim (DE)
(72) Erfinder: Langen, Dieter, D-5300 Bonn 3 (DE); Arenz, Helmut, D-5305 Alfter-Impekoven (DE)
(74) Vertreter: Grünecker, Kinkeldey, Stockmair & Schwanhäusser Anwaltssozietät

(56) Entgegenhaltungen:
- DE-A- 3 631 769
- US-A- 4 319 074

## Beschreibung

Die Erfindung betrifft ein Verfahren zum Längswasserabdichten eines eine Vielzahl von Kabelsträngen aufweisenden Kabelbündels, bei welchem die zwischen den einzelnen Kabelsträngen vorhandenen Zwischenräume in einem vorbestimmten abzudichtenden Abschnitt mit einer Kunststoffmasse verfüllt werden, wobei zwischen die Kabelstränge des Kabelbündels ein bei Erwärmung zu einer vergrößerten Querschnittsgestalt aufquellendes Kunsstoffelement, enthaltend einen oder bestehend aus einem thermoplastischen Schmelzkleber, eingebettet wird und in Bereich des abzudichtenden Abschnittes auf den Außenumfang des Kabelbündels ein in Radialrichtung vorgestreckter Wärmeschrumpfschlauch aufgeschoben wird, worauf der abzudichtende Kabelbündelabschnitt einer Wärmebehandlung zum Aufquellen des eingebetteten Kunststoffelementes sowie zum Aktivieren des thermoplastischen Schmelzklebers und zum Zurückschrumpfen des Schrumpfschlauches eng um das Kabelbündel unterzogen wird. Ein solches Verfahren ist in der DE-A-36 31 769 beschrieben, die nach dem Prioritätszeitpunkt der vorliegenden Erfindung veröffentlicht wurde.

Die Erfindung betrifft auch einen Bausatz zum Herstellen einer Vorrichtung zum Längswasserabdichten eines eine Vielzahl von Kabelsträngen aufweisenden Kabelbündels mit einem in der Wärme auf einen kleineren Durchmesser zurückschrumpfenden Wärmesehrumpfsehlauch und einen Kunststoffelement aus einem durch Wärmebehandlung auf einen vergrößerten Querschnitt aufquellenden Material, enthaltend oder bestehend aus einem thermoplastischen Schmelzkleber, wobei zwischen dem Wärmeschrumpfschlauch und dem Kunststoffelement ein Raum zur Aufnahme der Kabelstränge vorgesehen ist. Ein solcher Bausatz ist in der obengenannten DE-A-36 31 769 beschrieben.

Bei dem vorstehend genannten Verfahren wird bei der Verarbeitung von eine große Vielzahl von Kabelsträngen aufweisenden Kabelbündeln ein Kunststoffelement zwischen die Kabelstränge des Kabelbündels eingebracht, welches in seinem Außenumfang mit einer Vielzahl von Nuten bzw. Aufnahmetaschen versehen ist. Diese Nuten oder Taschen verhindern dank ihrer Stege, daß die Kabelstränge eng aufeinander liegen, wodurch der Zutritt von geschmolzenem Schmelzkleber in die Zwischenräume zwischen den Kabelsträngen verhindert würde. Häufig wird bei dem vorstehend genannten Verfahren auch ein Kunststoffelement in Form eines offenen Ringes verwendet, so daß eine erste Anzahl von Kabelsträngen durch das Innere dieses offenen Ringes geführt werden kann und eine zweite Vielzahl von Kabelsträngen auf den Außenumfang dieses offenen Ringes, dort gegebenenfalls in die vorstehend genannten Nuten oder Aufnahmetaschen abgelegt werden kann.

Die vorstehend erörterte Arbeitsweise (DE-A-36 31 769) macht mühevolle Handarbeit nötig und gewährleistet zudem nicht in jedem Fall, daß die Kabelstränge in der gewünschten, korrekten Anordnung der Wärmebehandlung zugeführt werden.

Wie in der vorstehend genannten DE-A-36 31 769 angegeben, ergibt sich der mit Hilfe der dort beschriebenen Erfindung erzielbare technische Fortschritt daraus, daß die zwischen den einzelnen Kabelsträngen sowie zwischen den Kabelsträngen und dem äußeren Wärmeschrumpfschlauch vorhandenen Zwischenräume an einer vorbestimmten Abdichtstelle mit Kunststoff verfüllt werden, wobei dieser Kunststoff von dem zwischen die Kabelstränge eingebrachten Kunststoffelement stammt. Falls der äußere Wärmeschrumpfschlauch an seiner Innenoberfläche mit einem Schmelzkleber beschichtet ist, stammt die verfüllende Kunststoffmasse zu einem Teil aus dem letztgenannten Schmelzklebermaterial. Nach Einbringen des Kunststoffelementes zwischen die Kabelstränge und Anordnen eines radialschrumpfenden Wärmeschrumpfschlauches auf dem Außenumfang des Kabelbündels wird der abzudichtende Kabelbündelabschnitt einer Wärmebehandlung unterworfen. Diese Wärmebehandlung führt zum Schmelzen und Aufquellen des Kunststoffelementes sowie zum Aktivieren des thermoplastischen Schmelzklebers und zum Zurückschrumpfen des Schrumpfschlauche, eng um das Kabelbündel herum.

Die gegenläufige Bewegung des aufquellenden Kunststoffelementes aus dem thermoplastischen Schmelzkleber und des radialschrumpfenden Schrumpfschlauches erzeugt im Inneren des Kabelbündels einen Druck, wodurch der Schmelzkleber in die Hohlräume zwischen den einzelnen Kabelsträngen eindringt und dabei die angestrebte Längswasserabdichtung hervorruft. Aus der US-A-4,319,074 ist ein Elektrokabel bekannt, um dessen Kabelstränge ein Wärmeschrumpfschlauch herum geschrumpft ist, und bei dem die Zwischenräume zwischen den Kabelsträngen mit einem isolierenden Kunststoff ausgefüllt ist.

Örtlich definierte Längswasserabdichtungen von eine Vielzahl von Kabelsträngen aufweisenden Kabelbündeln sind beispielsweise im Fahrzeugbau häufig von besonderer Wichtigkeit. So ist es beispielsweise wünschenswert, bestimmte Abschnitte von Kabelbäumen längswasserdicht auszustalten, falls an Kabelbäume ein Stecksystem angebracht wird, oder wenn ein Kabelbaum durch Trennwände hindurchgeführt wird, wie z.B. vom Motorraum eines Kraftfahrzeuges in den Fahrgastraum eines Kraftfahrzeuges. Häufig ist es auch erforderlich, einen Kabelbaum bei der Durchführung durch Trennwände gasdicht auszubilden.

Die vorliegende Erfindung verfolgt den Zweck, das Verfahren gemäß DE-A-36 31 769 so einfach durchführbar zu gestalten, daß angelernte Mitarbeiter in den Stand gesetzt werden, zuverlässig längswasserdichte Abdichtungen in den in Rede stehenden Kabelbündeln auszubilden.

Erfindungsgemäß wird dieses Ziel bei einem Verfahren gemäß Oberbegriff des Anspruchs 1 dadurch erreicht, daß als Kunststoffelement ein bandförmiges Dualklebeband mit einer ersten Schicht aus einer bei Raumtemperatur gut klebfähigen, nachgiebigen Masse sowie einer aus dem Schmelzkleber bestehenden zweiten Schicht verwendet wird und daß die Kabelstränge des Kabelbündels zum Zwecke ihrer korrekten Positionierung für die weitere Verarbeitung nebeneinander liegend mit der ersten Schicht verklebt werden, bevor die Wärmebehandlung erfolgt.

Mit Hilfe des Verfahrens nach der Erfindung werden folgende Vorteile erreicht:
Es können Kabelbündel mit beliebiger Aderanzahl bei Verwendung lediglich eines Dualbandes abgedichtet werden, welches je nach benötigter Länge von einer Vorratsspule abgelenkt wird.

Der Bedarf an Kunststoffmasse zum Verfüllen aller Zwischenräume im Inneren des Kabelbündels kann über die Schmelzkleberstärke und -breite des Dualbandes an den jeweiligen Verwendungsfall angepaßt werden.

Durch den Zweischicht-Kleberaufbau des Dualbandes sind eine schnelle Wärmezufuhr und damit eine optimale Verarbeitungsgeschwindigkeit bei der Herstellung der Längswasserabdichtung gewährleistet.

Durch Verkleben der Kabelstränge mit der ersten (bei Raumtemperatur gut klebfähigen) Schicht des Dualbandes werden die Kabelstränge für die folgende Weiterverarbeitung fixiert.

Derartige fixierte Kabelbündel mit vormontierten Abdichtstellen können mühelos im Betrieb transportiert werden, ohne daß die gewünschte Anordnung der Kabelstränge innerhalb des Kabelbündels verändert wird.

Das erfindungsgemäße Verfahren kann von angelernten Mitarbeitern zuverlässig ausgeführt werden.

Bei einem Bausatz gemäß Oberbegriff des Anspruchs 10 wird das von der Erfindung angestrebte Ziel dadurch erreicht, daß das Kunststoffelement als ein eine erste Schicht aus einer bei Raumtemperatur gut klebfähigen, nachgiebigen Masse sowie eine zweite Schicht aus dem Schmelzkleber aufweisendes Dualkleberband ausgebildet ist.

Ein solches Klebeband, das in jeweils vorteilhaften breiten und dicken Abmessungen verwendet werden kann, erleichtert das Herstellen von Längswasserabdichtungen sehr stark, wie aus der vorstehenden Aufstellung des mit Hilfe des erfindungsgemäßen Verfahrens erzielbaren Vorteile hervorgeht.

Bevorzugte Ausführungsformen der Erfindung sind in den Unteransprüchen angegeben.

Die Erfindung wird im folgenden anhand von Ausführungsbeispielen und unter Bezug auf die Zeichnung näher beschrieben. In dieser zeigt:
- Fig.1: eine schematische Darstellung des Dualkleberbandes,
- Fig.2: eine schematische Darstellung eines aus einer Vielzahl von Kabelsträngen bestehenden Kabelbündels,
- Fig.3: einen Schritt bei der Durchführung des erfindungsgemäßen Verfahrens,
- Fig.4: eine zweite Ausführungsform des in Fig. 3 illustrierten Verfahrensschrittes,
- Fig.5a: eine schematische Darstellung zur Erläuterung eines Verfahrensschrittes, welcher sich an den in Fig. 3 dargestellten Verfahrensschritt anschließt,
- Fig.5b: eine schematische Erläuterung eines Verfahrensschrittes, welcher alternativ zum in Fig. 5a dargestellten Verfahrensschritt durchgeführt wird,
- Fig.6: eine schematische Darstellung eines der abschließenden Wärmebehandlung vorangehenden Verfahrensschrittes bei Anwendung des in Fig. 5a erläuterten Schrittes,
- Fig.7: eine Erläuterung eines alternativ zu dem in Fig. 6 dargestellten Schritt durchzuführenden Schrittes (bei Anwendung des in Fig. 5b dargestellten Verfahrensschrittes), und
- Fig.8: einen schematisch dargestellten Schnitt durch ein auf erfindungsgemäße Weise längswasserdicht gemachtes vieladriges Kabelbündel.

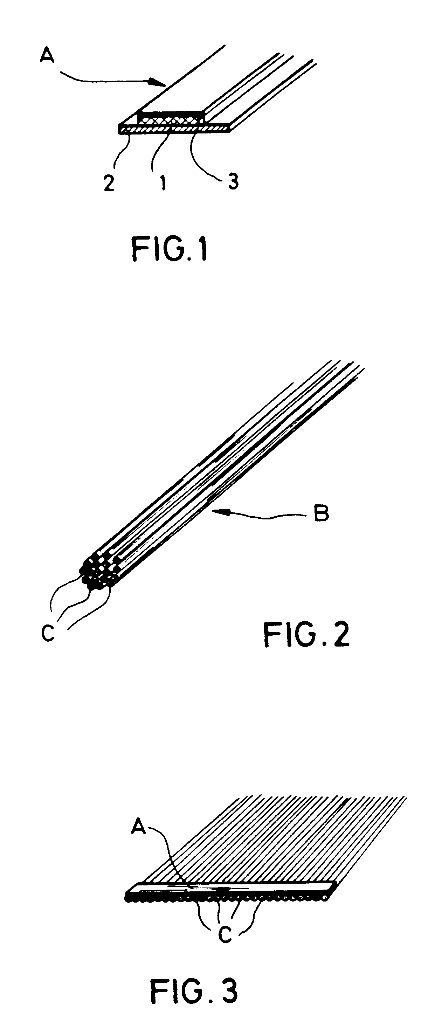

Fig. 1 zeigt den Aufbau eines Dualkleberbandes A. Dieses Ausführungsbeispiel des Dualkleberbandes A ist dreischichtig und besteht aus einer ersten Schicht 1 aus einer bei Raumtemperatur gut klebfähigen, nachgiebigen Masse, aus einer zweiten Schicht 2 aus einem Schmelzkleber sowie aus einem Trennpapier 3.

Stoffe, die bei Raumtemperatur gut klebfähig und zudem weich sind, sind chemisch oder physikalisch vernetzte oder unvernetzte Elastomere mit gesättigter oder ungesättigter Hauptkette sowie polarer oder unpolarer Struktur, die auf üblichen Substraten, wie Metallen, Keramik, Papier, Textilien, Kunststoffen, bei Raumtemperatur kleben und plastisch verformbar sind.

Im Sinne der Erfindung können für die erste Schicht Kautschuke eingesetzt werden, z.B. aus Homo- und Copolymeren des Polybutadiens sowie seinen halogenierten Derivaten, Polyurethanen und Acrylat-Kautschuken.

Im Sinne der Erfindung bevorzugt geeignete Elastomere sind vom Typus IIR (Butylkautschuk) und CIIR/BIIR (Halobutyl-Kautschuke).

Auch Mischungen von Kautschuken mit gesättigter und ungesättigter Struktur sind geeignet.

Die erste Schicht besteht vorzugsweise aus Butylkautschuk.

Als Schmelzkleber für die zweite Schicht geeignete Stoffe zeichnen sich dadurch aus, daß sie bei Temperatur und/oder Druckanwendung ihre Viskosität ändern und somit fließfähig werden (z.B. durch Schmelzen).

Besonders geeignet sind hierfür Thermoplaste aus Polyolefin-Homopolymeren und Polyolefin-Copolymeren.

Als Beispiele dieser Substanzklassen seien hier genannt:
Polyolefine (z.B. LDPE)
Poly(ethylen-co-propylen)
Poly(ethylen-co-vinylacetat)
Poly(ethylen-co-ethylacrylat)
Auch Mischungen der obengenannten Stoffe haben sich als sehr geeignet erwiesen.

Polyamide auf der Basis von dimeren Fettsäuren, die anschließend polykondensiert werden, stellen ebenfalls ausgezeichnete Schmelzkleber-Systeme im Sinne der Erfindung dar.

"Polymer Blends" aus Polyamiden, Polyamiden mit Polyolefin-Copolymeren sind besonders gute Materialien für die erfindungsgemäße Verwendung des Schmelzklebers.

Zusätzlich können die obenerwähnten Schmelzkleber-Systeme so modifiziert werden, daß bei Wärmezufuhr ein Aufschäumen stattfindet, welches zur Ausbildung einer porigen Struktur führt. Dies kann geschehen durch verdampfbare, niedermolekulare Verbindungen, die sich durch den Herstellungs- und/oder Verarbeitungsprozeß im Innern oder an der Oberfläche der Stoffe befinden. Des weiteren kann ein Aufschäumen durch eine geeignet dosierte Zugabe eines ausgewählten Treibmittels erzielt werden. Dieses Treibmittel spaltet bei Wärmezufuhr (z.B. beim Schrumpfvorgang) ein Gas ab, das zur Ausbildung einer Schaumstruktur mit zumeist geschlossen-zelligen Poren führt. Ein Beispiel für ein solches Treibmittel sind Azoverbindungen, wie Azodicarbonamid. Auch andere Treibmittel, die bei etwa 140 °C unter Schaumbildung zerfallen, sind geeignet.

Der Kristallitschmelzpunkt des thermoplastischen Schmelzklebers liegt im Temperaturbereich von 60 bis 120 °C. Als bei Wärmezufuhr unter Bildung geschlossener Poren aufschäumende Schmelzkleber werden endotherme Treibmittel bevorzugt, die bei etwa 140 °C selbstnukleierend unter Schaumbildung zerfallen. Als Beispiel für ein solches Treibmittel sei das von der Firma Boehringer-Ingelheim unter der Bezeichnung "Hydrocerol" vertriebene Treibmittel genannt.

Das Trennpapier 3 besteht vorzugsweise aus Silikonpapier.

Wie in Fig. 1 dargestellt, befindet sich die erste Schicht, also die Schicht aus der bei Raumtemperatur gut klebfähigen, weichen Kunststoffmasse zwischen der Schmelzkleberschicht 2 und dem Trennpapier 3.

Das Dualkleberband A kann als Rollenware verwendet werden, so daß der Benutzer die jeweils gewünschten Längen von einer Vorratsrolle ablängen kann.

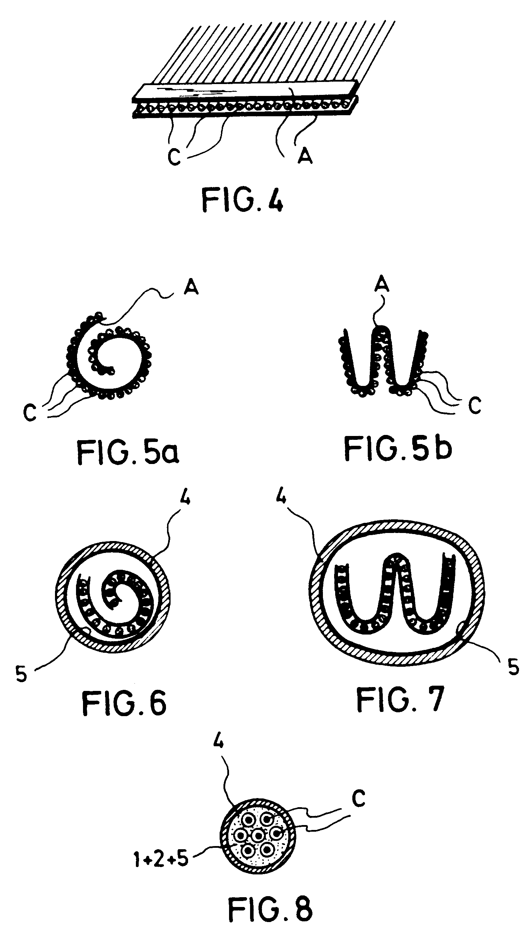

Fig. 2 zeigt schematisch ein aus einer Vielzahl von Leitersträngen C bestehendes Kabelbündel B. Zur Durchführung des erfindungsgemäßen Verfahrens wird ein solches Kabelbündel C im Bereich des abzudichtenden Abschnittes in eine Lage aus nebeneinanderliegenden Kabelsträngen C aufgefächert. Fig. 3 zeigt die parallel zueinander ausgerichteten Kabelstränge C des Kabelbündels. Im Bereich des abzudichtenden Abschnitts wird wenigstens eine der beiden Oberflächen der zu einer Lage ausgefächerten Kabelstränge C mit der ersten Schicht 1 des Dualkleberbandes A verklebt. In Fig. 3 ist dargestellt, daß lediglich eine Oberfläche des aufgefächerten Kabelbündels mit dem Dualkleberband beklebt ist. Es versteht sich, daß die andere Oberfläche gleichfalls mit einem Dualkleberband A beklebt sein kann. Diese zweite Ausführungsform ist schematisch in Fig. 4 erläutert, welche zeigt, wie die ausgefächerten Kabelbündel C zwischen einem oberen Dualkleberbandabschnitt und einem unteren Dualkleberbandabschnitt angeordnet sind.

Die gemäß Figuren 3 oder 4 mit dem Dualkleberband A verklebten Kabelstränge C werden auf zwei verschiedenen Weisen weiterverarbeitet. Gemäß Fig. 5 wird die auf das Dualkleberband A geklebte Kabelstrang-Lage spiralförmig aufgewickelt, bevor der abzudichtende Abschnitt des Kabelbündels mit einem Wärmeschrumpfschlauch überzogen wird. Dabei hat es sich als vorteilhaft herausgestellt, daß das spiralförmige Aufwickeln der beklebten Kabelstrang-Lage so erfolgt, daß das Dualkleberband innenseitig verläuft, während die Kabelstränge außenseitig verlaufen, wie in Fig. 5a dargestellt. Gemäß der in Fig. 5b erläuterten Ausführungsform wird die auf das Dualkleberband A geklebte Kabelstranglage zickzackförmig zusammengeschoben, bevor der abzudichtende Abschnitt des Kabelbündels mit einem Wärmeschrumpfschlauch überzogen wird.

Kabelstrang-Lagen, die entsprechend Fig. 4 beidseitig mit dem Dualkleberband A beklebt sind, können gemäß beiden in den Figuren 5a und 5b gezeigten Weiterverarbeitungsweisen verarbeitet werden. Werden beidseitig mit Dualkleberband versehene Kabelstrang-Lagen spiralförmig aufgewickelt, so ist bei dieser Ausführungsform die Wickelrichtig beliebig, da beide Oberflächen der ausgefächerten Lage in gleicher Weise mit dem Dualkleberband versehen sind. In Fig. 6 ist schematisch dargestellt, daß eine spiralförmig ausgewickelte Abdichtstelle außen mit einem Wärmeschrumpfschlauch 4 überzogen ist. Fig. 7 zeigt, wie eine zickzackförmig zusammengeschobene Abdichtstelle mit einem äußeren Wärmeschrumpfschlauch 4 überzogen ist. Sowohl in Fig. 6 als auch in Fig. 7 weist der äußere Wärmeschrumpfschlauch 4 eine Innenschicht 5 aus einem Schmelzkleber auf. Bevorzugterweise handelt es sich bei dieser Schmelzkleber-Innenschicht 5 um dasselbe Material wie bei der zweiten Schicht (Schmelzkleberschicht) des Dualkleberbandes A.

Es sei unterstrichen, daß es keinesfalls erforderlich ist, die Abdichtstellen gemäß Figuren 5a und 5b mit Wärmeschrumpfschläuchen zu umhüllen. Statt eines wärmeschrumpfenden Schlauchmaterials kann auch eine wärmeschrumpfende Folie benutzt werden, die um die Abdichtstelle herumgelegt und sodann wie ein nahtloses Rohr verschweißt wird. Das Verarbeiten von schrumpffähigem Bahnmaterial anstelle von schrumpffähigem Schlauchmaterial ist in der DE-A-38 03 318 (der Anmelderin) im einzelnen beschrieben. Auf diese Beschreibung wird Bezug genommen.

Bei der abschließenden Wärmebehandlung schrumpft der äußere Schrumpfschlauch bzw. die äußere Schrumpffolie und schmilzt die Schmelzkleberschicht 2 des Dualkleberbandes A. Bei dieser Wärmebehandlung schmilzt auch das Material der ersten Schicht des Dualkleberbandes A. Wie sich herausgestellt hat, führt die Mischung aus dem Schmelzklebermaterial 2 und dem Material der ersten Schicht (vorzugsweise ein Kautschukmaterial) zu einer besonders guten und dauerhaften Abdichtung, so daß weder Flüssigkeit noch Gase in das Innere des abgedichteten Kabelbündelabschnittes eindringen können.

Die Abdichtstelle hat nach der Wärmebehandlung das in Fig. 8 im Querschnitt gezeigte Aussehen. Man erkennt eine Außenschicht 4 aus einem in der Wärme geschrumpften Kunststoffmaterial. Im Inneren dieser Außenschicht 4 sind die Kabelstränge C angeordnet. Die Zwischenräume zwischen den Kabelsträngen C sowie zwischen den Kabelsträngen und dem Außenmantel 4 sind vollständig mit einer Masse ausgefüllt, die sich durch Schmelzen und/oder Verschäumen der Schichten 1 und 2 des Dualkleberbandes A gebildet hat. Gegebenenfalls enthält diese Füllmasse auch Material aus der inneren Schmelzkleberbeschichtung 5 des äußeren schrumpffähigen Materials 4.

Wie bereits erwähnt, besteht die erste Schicht des Dualkleberbandes vorzugsweise aus einem Kautschukmaterial, wobei Butylkautschuk besonders bevorzugt ist. Die zweite Schicht des Dualkleberbandes A besteht aus einem Schmelzklebermaterial, vorzugsweise aus einem solchen Material, welches bei Erwärmung aufschäumt und dabei geschlossene Poren bildet.

Ein bevorzugtes Dualkleberband hat den folgenden Aufbau:

Die erste Schicht hat eine Dicke von 0,2 bis 1,5 mm bei einer Breite von vorzugsweise von 5 bis 15 mm. Das Material dieser ersten Schicht ist bei Raumtemperatur stark klebend und verfügt über Haft- und Materialeigenschaften im wesentlichen wie Butylkautschuk.

Die Schmelzkleberschicht 2 hat vorzugsweise eine Dicke von 0,2 bis 1,5 mm bei einer Breite von vorzugweise 5 bis 20 mm. Die Materialeigenschaften dieses Schmelzklebers wurden vorstehend bereits genannt. Ferner wird auf die Patentanmeldung DE-A-36 31 769 Bezug genommen.

Das Trennpapier 3 besteht vorzugsweise aus Silikonpapier. Diese Trennpapier wird vor der Anwendung entfernt. Es soll die erste Schicht seitlich mindestens um 1 mm überragen. Auf diese Weise läßt sich das Trennpapier leicht bei der Montage entfernen.

Funktion und wesentliche Vorteile, die sich durch den Einsatz eines Elastomerbandes (z.B. Butylkautschuk) als erste Schicht in Kombination mit einem Schmelzkleberband als zweite Schicht ergeben:
- schnelleres und präziseres Positionieren der einzelnen Adern des Kabelstranges durch Eindrücken in das Kautschuk-Band (siehe Figuren 3 bis 8);
- exakte Dosierung des Schmelzklebers, gesteuert über die Dicke, Breite und Länge des Dualkleberbandes;
- hohes Maß an Dichtigkeit, da jede Ader vom Schmelzkleber und/oder dichtender Kautschuk-Masse umschlossen ist (siehe Figuren 5 bis 8);
- leichte und variable Konfektionierung beim Anwender und
- zusätzliche Verbesserung der physikalischen Eigenschaftswerte der Abdichtung durch den Einsatz z.B. des Butylkautschuk-Bandes:
   bessere Flexibilität,
   Verbesserung der elektrischen Werte und
   Erhöhung der Wärmeleitfähigkeit beim
   Schrumpf- und Schmelzvorgang.

## Patentansprüche

1. Verfahren zum Längswasserabdichten eines eine Vielzahl von Kabelsträngen (C) aufweisenden Kabelbündels (B), bei welchem die zwischen den einzelnen Kabelsträngen vorhandenen Zwischenräume in einem vorbestimmten abzudichtenden Abschnitt mit einer Kunststoffmasse verfüllt werden, wobei zwischen die Kabelstränge des Kabelbündels ein bei Erwärmung zu einer vergrößerten Querschnittsgestalt aufquellendes Kunststoffelement, enthaltend einen oder bestehend aus einem thermoplastischen Schmelzkleber, eingebettet wird und im Bereich des abzudichtenden Abschnittes auf den Außenumfang des Kabelbündels ein in Radialrichtung vorgestreckter Wärmeschrumpfschlauch (4,5) aufgeschoben wird, worauf der abzudichtende Kabelbündelabschnitt einer Wärmebehandlung zum Aufquellen des eingebetteten Kunststoffelementes sowie zum Aktivieren des thermoplastischen Schmelzklebers und zum Zurückschrumpfen des Schrumpfschlauches eng um das Kabelbündel unterzogen wird
dadurch **gekennzeichnet,**
daß als Kunststoffelement ein bandförmiges Dualkleberband (A) mit einer ersten Schicht (1) aus einer bei Raumtemperatur gut klebfähigen, nachgiebigen Masse sowie einer aus dem Schmelzkleber bestehenden zweiten Schicht (2) verwendet wird und daß die Kabelstränge (C) des Kabelbündels (B) zum Zwecke ihrer korrekten Positionierung für die weitere Verarbeitung nebeneinanderliegend mit der ersten Schicht verklebt werden, bevor die Wärmebehandlung erfolgt.

2. Verfahren nach Anspruch 1, dadurch gekennzeichnet, daß das Kabelbündel (B) im abzudichtenden Abschnitt in eine Lage aus nebeneinanderliegenden Kabelsträngen aufgefächert wird und daß wenigstens eine der Oberflächen dieser Kabelstranglage mit der ersten Schicht (1) des Dualkleberbandes (A) verklebt wird.

3. Verfahren nach Anspruch 2, dadurch gekennzeichnet, daß die auf das Dualkleberband (A) geklebte Kabelstrang-Lage spiralförmig aufgewickelt wird, bevor der abzudichtende Abschnitt mit dem Wärmeschrumpfschlauch (4,5) überzogen wird.

4. Verfahren nach Anspruch 3, dadurch gekennzeichnet, daß das spiralförmige Aufwickeln so erfolgt, daß das Dualkleberband (A) innenseitig und die Kabelstränge (C) außenseitig verlaufen.

5. Verfahren nach Anspruch 2, dadurch gekennzeichnet, daß die auf das Dualkleberband (A) geklebte Kabelstrang-Lage zickzackförmig zusammengeschoben wird, bevor der abzudichtende Abschnitt mit dem Wärmeschrumpfschlauch (4,5) überzogen wird.

6. Verfahren nach einem der Ansprüche 1 bis 5, dadurch gekennzeichnet, daß ein Dualkleberband (A) verwendet wird, dessen erste Schicht (1) aus einem Kautschukmaterial, vorzugsweise Butylkautschuk, besteht.

7. Verfahren nach einem der Ansprüche 1 bis 6, dadurch gekennzeichnet, daß ein Dualkleberband (A) verwendet wird, dessen zweite Schicht (2) im wesentlichen aus einem Schmelzkleberwerkstoff besteht, der bei Erwärmung aufschäumt und dabei geschlossene Poren bildet.

8. Verfahren nach einem der Ansprüche 1 bis 7, dadurch gekennzeichnet, daß das Dualkleberband (A) von einer Vorratsrolle abgelängt wird.

9. Verfahren nach einem der Ansprüche 1 bis 8, dadurch gekennzeichnet, daß ein Dualkleberband (A) verwendet wird, bei dem die erste Schicht (1) zwischen der zweiten Schicht (2) und einem Trennpapier (3) angeordnet ist.

10. Bausatz zum Herstellen einer Vorrichtung zum Längswasserabdichten eines eine Vielzahl von Kabelsträngen (C) aufweisenden Kabelbündels (B) mit einem in der Wärme auf einen kleineren Durchmesser zurückschrumpfenden Wärmeschrumpfschlauch (4,5) und einen Kunststoffelement aus einem durch Wärmebehandlung auf einen vergrößerten Querschnitt aufquellenden Material, enthaltend oder bestehend aus einem thermoplastischen Schmelzkleber, wobei zwischen dem Wärmeschrumpfschlauch und dem Kunststoffelement ein Raum zur Aufnahme der Kabelstränge vorgesehen ist,
dadurch **gekennzeichnet,**
daß das Kunststoffelement als ein eine erste Schicht (1) aus einer bei Raumtemperatur gut klebfähigen, nachgiebigen Masse und eine zweite Schicht (2) aus dem Schmelzkleber aufweisendes Dualkleberband (A) ausgebildet ist.

11. Bausatz nach Anspruch 10, dadurch gekennzeichnet, daß die erste Schicht (1) des Dualkleberbandes (A) aus einem Kautschukmaterial, vorzugsweise Butylkautschuk besteht.

12. Bausatz nach Anspruch 11, dadurch gekennzeichnet, daß die zweite Schicht (2) des Dualkleberbandes (A) im wesentlichen aus einem Schmelzkleber besteht, der bei Erwärmung aufschäumt und dabei geschlossene Poren bildet.

13. Bausatz nach einem der Ansprüche 10 bis 12, dadurch gekennzeichnet, daß die erste Schicht (1) des Dualkleberbandes (A) zwischen der zweiten Schicht (2) und einer Trennpapierschicht (3) angeordnet ist.

14. Bausatz nach Anspruch 13, dadurch gekennzeichnet, daß die Trennpapierschicht (3) aus Silikonpapier besteht.

15. Bausatz nach Anspruch 13, dadurch gekennzeichnet, daß die Trennpapierschicht (3) breiter ist als die erste Schicht (1) und daß die zweite Schicht (2) breiter ist als die erste Schicht (1) und die Trennpapierschicht (3).

16. Bausatz nach einem der Ansprüche 10 bis 15, dadurch gekennzeichnet, daß der Wärmeschrumpfschlauch (4) eine innere Schmelzkleberschicht (5) aufweist.

## Claims

1. Process for the longitudinal waterproofing of a cable bundle (B) having a multiplicity of cable strands (C) in which the interstices between the individual cable strands in a predetermined section to be waterproofed are filled with a plastic composition, a plastic member which swells on heating to form an enlarged cross-sectional shape and contains or consists of a thermoplastic melt adhesive being embedded between the cable strands of the cable bundle and a heat-shrinkable tube (4, 5) which is pre-stretched in the radial direction being pushed onto the outer circumference of the cable bundle in the region of the section to be waterproofed, whereupon the cable bundle section to be waterproofed is subjected to a thermal treatment to swell the embedded plastic member and to activate the thermoplastic melt adhesive and to shrink back the shrinkable tube closely around the cable bundle, characterised in that the plastic member is a tape-shaped dual adhesive tape (A) with a first layer (1) of a ductile composition which is readily adhesive at room temperature and a second layer (2) consisting of the melt adhesive and in that, before the heat treatment takes place, the cable strands (C) of the cable bundle (B) are adhesively bonded to the first layer in an adjacently lying manner for the purpose of their correct positioning for further processing.

2. Process according to Claim 1, characterised in that the cable bundle (B) in the section to be waterproofed is fanned out into a layer of adjacently lying cable strands and in that at least one of the surfaces of this layer of cable strands is adhesively bonded to the first layer (1) of the dual adhesive tape (A).

3. Process according to Claim 2, characterised in that the cable strand layer adhesively bonded to the dual adhesive tape (A) is wound in a helical manner before the section to be waterproofed is covered with the heat-shrinkable tube (4, 5).

4. Process according to Claim 3, characterised in that the helical winding takes place in such a manner that the dual adhesive tape (A) runs on the inside and the cable strands (C) run on the outside.

5. Process according to Claim 2, characterised in that the cable strand layer adhesively bonded to the dual adhesive tape (A) is folded together in a zig-zag manner before the section to be waterproofed is covered with the heat-shrinkable tube (4, 5).

6. Process according to one of Claims 1 to 5, characterised in that a dual adhesive tape (A) is used, the first layer (1) of which consists of a rubber material, preferably butyl rubber.

7. Process according to one of Claims 1 to 6, characterised in that a dual adhesive tape (A) is used, the second layer (2) of which consists essentially of a melt adhesive material which foams upon heating, forming closed pores.

8. Process according to one of Claims 1 to 7, characterised in that the dual adhesive tape (A) is cut off from a supply roll.

9. Process according to one of Claims 1 to 8, characterised in that a dual adhesive tape (A) is used in which the first layer (1) is arranged between the second layer (2) and a release paper (3).

10. Kit for producing a device for the longitudinal waterproofing of a cable bundle (B) having a multiplicity of cable strands (C), which kit has a heat shrinkable tube (4, 5) shrinking back, when heated, to a smaller diameter and a plastic member of a material swelling to an enlarged cross-section when heat-treated and containing or consisting of a thermoplastic melt adhesive, a space to receive the cable strands being provided between the heat shrinkable tube and the plastic member, characterised in that the plastic member is formed as a dual adhesive tape (A) having a first layer (1) of a ductile composition which is readily adhesive at room temperature and a second layer (2) of the melt adhesive.

11. Kit according to Claim 10, characterised in that the first layer (1) of the dual adhesive tape (A) consists of a rubber material, preferably butyl rubber.

12. Kit according to Claim 11, characterised in that the second layer (2) of the dual adhesive tape (A) consists essentially of a melt adhesive which foams upon heating, forming closed pores.

13. Kit according to one of Claims 10 to 12, characterised in that the first layer (1) of the dual adhesive tape (A) is arranged between the second layer (2) and a release paper layer (3).

14. Kit according to Claim 13, characterised in that the release paper layer (3) consists of silicone paper.

15. Kit according to Claim 13, characterised in that the release paper layer (3) is wider than the first layer (1) and in that the second layer (2) is wider than the first layer (1) and the release paper layer (3).

16. Kit according to one of Claims 10 to 15, characterised in that the heat shrinkable tube (4) has an inner melt adhesive layer (5).

## Revendications

1. Procédé pour étancher à l'eau, dans le sens de la longueur, un faisceau de câbles (B) comportant un grand nombre de câbles, fils ou brins analogues (C), selon lequel on remplit les interstices entre les différents brins de câble avec une masse de matière plastique dans un segment prédéterminé à étancher, avec incorporation entre les brins de câble du faisceau d'un élément de matière plastique qui gonfle en une forme de section droite plus grande en cas d'échauffement et qui contient ou est formé d'une colle à fusion thermoplastique, et avec glissement sur la périphérie extérieure du faisceau de câbles, dans la zone du segment à étancher, d'une gaine rétractable (4, 5) préétirée en direction radiale, et selon lequel on soumet ensuite le segment de faisceau à étancher à un traitement thermique afin de produire le gonflement de l'élément de matière plastique incorporé ainsi que pour activer la colle à fusion thermoplastique et produire la rétraction de la gaine, de manière que celle-ci entoure étroitement le faisceau de câbles,
caractérisé en ce que
on utilise comme élément de matière plastique un ruban adhésif double (A) en forme de bande, comportant une première couche (1) constituée d'une masse souple, de bonne adhérence à la température ordinaire, ainsi qu'une deuxième couche (2) constituée de la colle à fusion, et que l'on colle ensemble les brins de câble (C) du faisceau (B), pendant qu'ils sont juxtaposés, au moyen de la première couche, en vue de leur positionnement convenable pour le traitement consécutif, avant que l'on n'effectue le traitement thermique.

2. Procédé selon la revendication 1, caractérisé en ce que, dans le segment à étancher, on étale le faisceau (B) en une couche de brins de câble juxtaposés et que l'on assemble par collage, au moyen de la première couche (1) du ruban adhésif double (A), au moins l'une des faces de cette couche de brins de câble.

3. Procédé selon la revendication 2, caractérisé en ce que l'on enroule en spirale la couche de brins de câble collée sur le ruban adhésif double (A), avant que l'on ne recouvre le segment à étancher par la gaine rétractable (4, 5).

4. Procédé selon la revendication 3, caractérisé en ce que l'on effectue l'enroulement en spirale de manière que le ruban adhésif double (A) se trouve sur le côté intérieur et les brins de câble (C) se trouvent sur le côté extérieur.

5. Procédé selon la revendication 2, caractérisé en ce que l'on comprime en zigzag la couche de brins de câble collée sur le ruban adhésif double (A), avant que l'on ne recouvre le segment à étancher par la gaine rétractable (4, 5).

6. Procédé selon une des revendications 1 à 5, caractérisé en ce que l'on utilise un ruban adhésif double (A) dont la première couche (1) est constituée d'un matériau caoutchouteux, de préférence de butyl-caoutchouc.

7. Procédé selon une des revendications 1 à 6, caractérisé en ce que l'on utilise un ruban adhésif double (A) dont la deuxième couche (2) est faite essentiellement d'un matériau constituant une colle à fusion, qui se transforme en mousse en cas d'échauffement, en formant des pores fermés.

8. Procédé selon une des revendications 1 à 7, caractérisé en ce que l'on détache les longueurs nécessaires de ruban adhésif double (A) d'une bobine d'alimentation.

9. Procédé selon une des revendications 1 à 8, caractérisé en ce que l'on utilise un ruban adhésif double (A) sur lequel la première couche (1) est disposée entre la deuxième couche (2) et un papier de séparation (3).

10. Lot de pièces pour réaliser un dispositif d'étanchéification longitudinale à l'eau d'un faisceau de câbles (B) comportant un grand nombre de câbles, fils ou brins analogues (C), comprenant une gaine rétractable (4, 5) qui se rétracte sous l'effet de la chaleur à un plus petit diamètre et un élément de matière plastique formé d'un matériau qui se gonfle à une plus grande section droite par un traitement thermique et qui contient ou est constitué d'une colle à fusion thermoplastique, avec prévision d'un espace pour la réception des brins de câble entre la gaine rétractable et l'élément de matière plastique, caractérisé en ce que l'élément de matière plastique est réalisé comme un ruban adhésif double (A) possédant une première couche (1) constituée d'une masse souple, de bonne adhérence à la température ordinaire, et une deuxième couche (2) constituée de la colle à fusion.

11. Lot de pièces selon la revendication 10, caractérisé en ce que la première couche (1) du ruban adhésif double (A) est constituée d'un matériau caoutchouteux, de préférence de butylcaoutchoux.

12. Lot de pièces selon la revendication 11, caractérisé en ce que la deuxième couche (2) du ruban adhésif double (A) est constituée essentiellement d'une colle à fusion qui se transforme en mousse en cas d'échauffement, en formant des pores fermés.

13. Lot de pièces selon une des revendications 10 à 12, caractérisé en ce que la première couche (1) du ruban adhésif double (A) est disposée entre la deuxième couche (2) et une couche de papier de séparation (3).

14. Lot de pièces selon la revendication 13, caractérisé en ce que la couche de papier de séparation (3) est faite de papier au silicone.

15. Lot de pièces selon la revendication 13, caractérisé en ce que la couche de papier de séparation (3) est plus large que la première couche (1) et que la deuxième couche (2) est plus large que la première couche (1) et la couche de papier de séparation (3).

16. Lot de pièces selon une des revendications 10 à 15, caractérisé en ce que la gaine rétractable (4) comporte une couche intérieure (5) de colle à fusion.
